**Europäisches Patentamt**

**European Patent Office**

**Office européen des brevets**

(19)

(11) Veröffentlichungsnummer: **0 073 177**
**B1**

(12)

# EUROPÄISCHE PATENTSCHRIFT

(45) Veröffentlichungstag der Patentschrift:
06.08.86

(51) Int. Cl.⁴: **A 61 C 8/00**

(21) Anmeldenummer: 82810345.7

(22) Anmeldetag: 19.08.82

(54) **Implantat zur Befestigung eines künstlichen Zahnersatzes.**

(30) Priorität: 20.08.81 CH 5375/81

(43) Veröffentlichungstag der Anmeldung:
02.03.83 Patentblatt 83/9

(45) Bekanntmachung des Hinweises auf die Patenterteilung:
06.08.86 Patentblatt 86/32

(84) Benannte Vertragsstaaten:
DE FR GB IT SE

(56) Entgegenhaltungen:
CH - A - 618 870
FR - A - 2 385 384
US - A - 4 177 562

(73) Patentinhaber: INSTITUT STRAUMANN AG,
CH-4437 Waldenburg (CH)

(72) Erfinder: Sutter, Franz, Bennwilerstrasse 42,
CH-4435 Niederdorf (CH)

(74) Vertreter: Eder, Carl E. et al, Patentanwaltsbüro EDER
AG Münchensteinerstrasse 2, CH-4052 Basel (CH)

# Beschreibung

Die Erfindung betrifft ein Implantat gemäss dem Oberbegriff des Anspruchs 1.

Aus der schweizerischen Patentschrift 604 674 ist ein Kieferimplantat bekannt, das einen hülsenförmigen Sockel mit einem im wesentlichen kreiszylindrischen Mantel und einer diesen einenends abschliessenden Stirnwand aufweist. Der Sockel hängt bei der Stirnwand mit einem Pfeiler zusammen und ist an seinem andern Ende offen. Im Mantel und in dem diesen mit der Stirnwand verbindenden Übergangsteil sind über den Umfang verteilte Bohrungen vorhanden. Der Mantel ist an seiner Aussenfläche ferner noch mit einer schraubenlinienförmig verlaufenden Rippe versehen.

Aus der schweizerischen Patentschrift 618 870 sind Kiefer-Implantate mit einem zwei oder drei hülsenförmige, im wesentlichen kreiszylindrische Teile aufweisenden Sockel und einem Pfeiler bekannt, dessen eines Ende mit dem Sockel verbunden ist und dessen anderes, freies, zum Halten des Zahnersatzes dienendes Ende über die einen Enden der hohlzylindrischen Sockelteile herausragt. Die hohlen, kreiszylindrischen Sockelteile sind an ihren dem freien Pfeiler-Ende abgewandten Enden vollständig offen, während an ihren andern Enden eine Stirnwand vorhanden ist. Die Mäntel und Stirnwände der hülsenförmigen Sockelteile sind mit Bohrungen versehen, deren Durchmesser wesentlich kleiner als der Innendurchmesser der hülsenförmigen Sockelteile ist.

Wenn eines der erwähnten, aus den Schweizerpatentschriften 606 674 und 618 870 vorbekannten Implantate in einem Kiefer eingesetzt werden soll, setzt man dieses so tief in den Kiefer ein, dass auch die Stirnwand des bzw. jedes hohlzylindrischen Sockelteils noch im Knochen versenkt wird und ein wenig unter der ursprünglichen Knochenoberfläche zu liegen kommt. Um ein solches Einsetzen zu ermöglichen, fräst man für den bzw. jeden hohlzylindrischen Sockelteil vorgängig ein Loch in den Knochen, das im tiefsten Teil durch einen zum Mantel des hohlzylindrischen Teils komplementären Ringspalt und in den zum Aufnehmen der Stirnwand dienenden Mündungsteil durch eine volle, kreiszylindrische Bohrung gebildet ist. Nach dem Einsetzen des Implantates wächst dann der Knochen im Laufe der Zeit über der Stirnwand bzw. den Stirnwänden wieder nach, so dass schliesslich nur noch der Pfeiler aus dem Knochen herausragt.

Zum Einsetzen dieser Implantate muss man also im Mündungsbereich der zum Aufnehmen der Sockel dienenden Löcher ziemlich viel Knochen-Material wegnehmen. Es hat sich jedoch gezeigt, dass es manchmal verhältnismässig lange dauert, bis die Stirnwände wieder von Knochen überwachsen sind und bis der Knochen die sich in der Stirnwand befindenden Löcher durchwachsen hat. Dies ist vor allem dann sehr problematisch, wenn ein Implantat in einen Oberkiefer eingesetzt werden soll. Beim Oberkiefer-Knochen ist nämlich die Corticalis, d.h. die Schicht aus verhältnismässig festem Knochenmaterial, im Vergleich zur Corticalis des Unterkiefers nur dünn. Wenn daher im Oberkiefer Löcher der beschriebenen Art gebildet werden müssen, wird das Implantat zunächst nur von der lockeren Spongiosa gehalten. Ferner ist auch nach dem Nachwachsen des Knochenmaterials im Bereich der Stirnwand nur wenig Knochenmaterial vorhanden. Es ist daher häufig nicht möglich, im Oberkiefer eine ausreichende Verankerung zu erzielen. Zudem weist die Knochenoberfläche, wenn der Knochen die Stirnwände der hohlzylindrischen Sockelteile überwachsen hat, bei diesen meist eine gewisse Senkung auf.

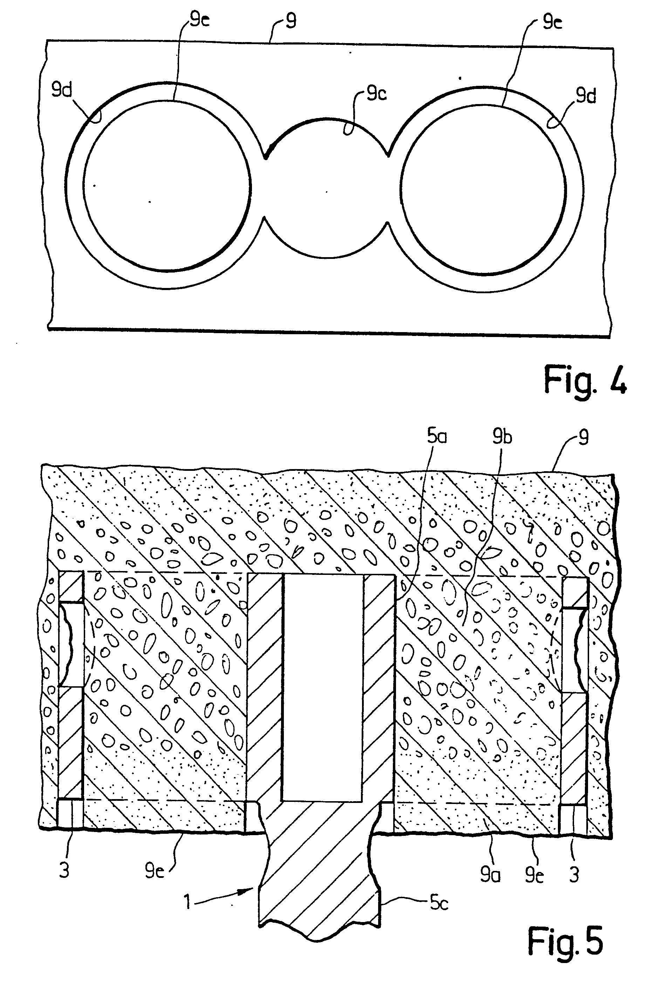

Aus der US-Patentschrift 4 177 562 sind Kiefer-Implantate mit einem im allgemeinen plättchen- oder quaderförmigen Sockel bekannt. Das in der Figur 4 dieser Patentschrift dargestellte Implantat besitzt im Mittelabschnitt ein Loch zum Einsetzen eines Pfeilers und beidseitig des Mittelabschnitts je ein Paar Seitenwände, die über ihre ganze Höhe durch Zwischenräume voneinander getrennt sind und Teile eines Innengewindes aufweisen. In diese Innengewinde werden bei der Verwendung des Implantats Schrauben eingeschraubt, die dann die erwähnten Zwischenräume mehr oder weniger unterteilen.

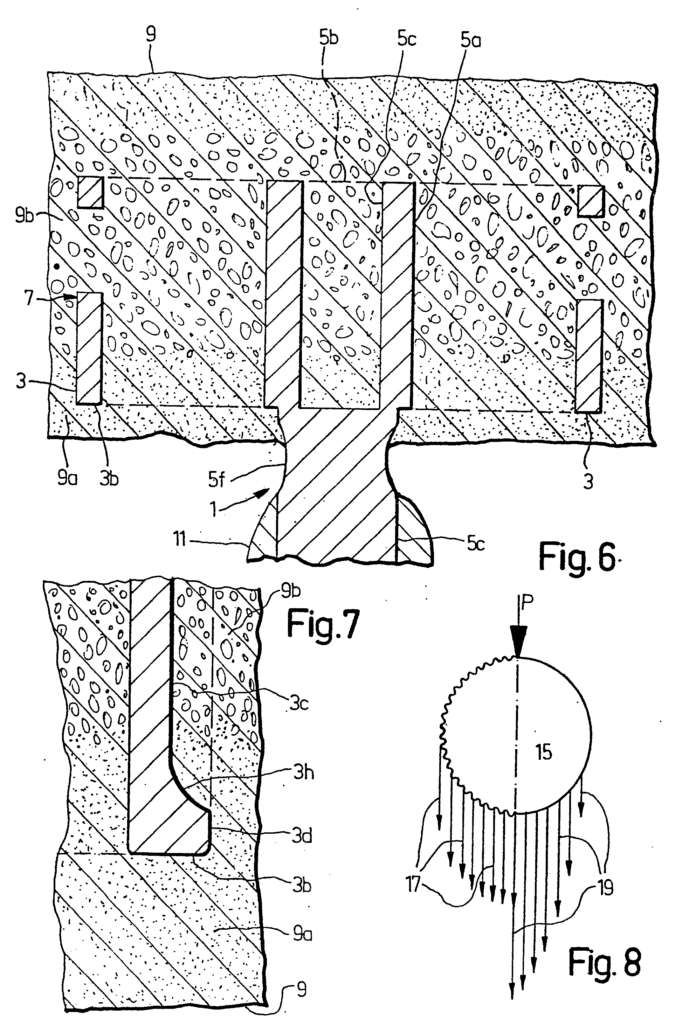

Gemäss der US-Patentschrift 4 177 562 (Fig. 8–10) wird der Kieferknochen zum Einsetzen eines Implantats mit einem Kanal versehen, der im Vertikalschnitt eine rechteckige Querschnittsform hat. In diesem Kanal bleiben keine Knochenzapfen bestehen, die in die erwähnten Implantat-Zwischenräume hineinragen. Es wäre aber praktisch auch gar nicht möglich, einen Kieferknochen derart zu bearbeiten, dass Knochenzapfen bestehen bleiben, die in die zwischen den erwähnten Seitenwand-Paaren vorhandenen Zwischenräume hineinragen und die nicht von den Schrauben eingenommenen Hohlräume ausfüllen oder gar noch durch diese hindurch ragen. Bei einem derartigen Implantat muss also nach dem Einsetzen des Implantats viel Knochenmaterial nachwachsen, um die nach dem Einsetzen des Implantats zwischen den Seitenwänden und den Schrauben verbleibenden Hohlräume auszufüllen und den quaderförmigen Sockel beidseitig des Pfeilers zu überdecken. Da der quaderförmige Sockel bei seinen beiden zur Pfeilerachse parallelen Schmalseiten lediglich die durch die verhältnismässig schmalen, fast schneidenartigen Ränder der Seitenwände gebildeten Begrenzungsflächen aufweist und da beim Kauen von einem vom Zahnimplantat gehaltenen, künstlichen Zahnersatz nicht nur parallel zur Pfeilerachse, sondern auch quer dazu gerichtete Kräfte auf das Implantat übertragen werden, können bei den Rändern der Seitenwände sehr grosse Druck-, Zug- und Scherspannungen zwischen dem Implantat und dem Kieferknochen auftreten. Grosse Spannungen fördern jedoch einen Knochenabbau und wirken daher einer dauerhaften Verankerung des Implantats entgegen. Zudem haben die Implantate gemäss der US-Patentschrift 4 177 562 noch den Nachteil, dass sie aus mehreren Einzelteilen, nämlich einem Sockel, einem Pfeiler und Schrauben zusammengesetzt werden müssen.

Aus der französischen Offenlegungsschrift 2 385 384 sind Kiefer-Implantate mit einem einen Sockel bildenden Unterteil und einem lösbar mit diesem verbundenen, pfeilerartigen, aus verschiedenen Einzelteilen bestehenden Oberteil bekannt. Der Sockel weist einen zapfenförmigen Teil oder zwei durch einen Steg miteinander verbundene, zapfenförmige Teile auf. Der bzw. jeder zapfenförmige Teil ist an seinem dem Pfeiler abgewandten Ende mit vier Füssen mit nach aussen gerichteten Fussenden versehen. Die Füsse werden nach dem Einsetzen des Sockels in ein in einem Kieferknochen angebrachtes Loch mit einem Werkzeug von einander weggespreizt, damit sie in das Knochenmaterial eindringen.

Wenn derartige Implantate eingesetzt werden sollen, ist es nicht möglich, Kieferknochen derart mit Löchern zu versehen, dass die Implantate diese Löcher ausfüllen. Insbesondere ergeben sich im Bereich der Füsse und in dem nach dem Spreizen der Füsse in den zapfenförmigen Teilen entstehenden Durchgangsloch zwangsläufig frei bleibende Hohlräume, so dass verhältnismässig viel Knochenmaterial nachwachsen muss, um diese Hohlräume auszufüllen und die zapfenförmigen Teile an ihren den Füssen abgewandten Enden zu überdecken. Ferner werden beim Spreizen der schneidenartigen Fussenden und auch später beim Kauen im Bereich der Fussenden grosse Kräfte vom Implantat auf das Knochenmaterial ausgeübt, so dass dort fast zwangsläufig Knochenmaterial abgebaut wird. ZUdem ist das Einsetzen dieser mehrteiligen Implantate verhältnismässig kompliziert.

Der Erfindung liegt daher die Aufgabe zugrunde, ein Implantat zu schaffen, das die Nachteile der bekannten Implantate vermeidet und bei dem insbesondere die Teile des Sockels bei ihren pfeilerseitigen Enden möglichst schnell überwachsen werden und das auch in einem Knochen, dessen Corticalis verhältnismässig dünn ist, stabil und dauerhaft verankert werden kann.

Diese Aufgabe wird durch ein Implantat der einleitend genannten Art gelöst, das erfindungsgemäss durch die Merkmale des Anspruchs 1 gekennzeichnet ist.

In der Teilanmeldung 84 111 552.0 (Veröffentlichungsnummer: EP-A-0 139 253) sind Ausführungsbeispiele enthalten, die mit denen dieser Patentschrift identisch sind.

Besonders vorteilhafte Ausgestaltungen des Implantats ergeben sich aus den vom Anspruch 1 abhängigen Ansprüchen.

Die Erfindung soll nun anhand in der Zeichnung dargestellter Ausführungsbeispiele erläutert werden. In der Zeichnung zeigen

die Figur 1 eine schaubildliche Darstellung eines Implantates

die Figur 2 einen quer zur Längsrichtung des Pfeilers gelegten Schnitt entlang der Linie II–II der Figur 1,

die Figur 3 einen Schnitt durch die Mittelachse des Hohlzylinders und die Linie III–III der Figur 1,

die Figur 4 eine Draufsicht auf die Unterseite eines Oberkiefer-Knochens,

die Figur 5 einen schematischen Schnitt durch den in der Figur 4 dargestellten Knochen unmittelbar nach dem Einsetzen des Implantates,

die Figur 6 einen der Figur 5 entsprechenden Schnitt, aber nachdem der Knochen nachgewachsen ist,

die Figur 7 einen Schnitt durch einen andern Teil eines Sockels des in einen Oberkiefer-Knochen eingesetzten Implantates in grösserem Massstab,

die Figur 8 ein Diagramm zur Veranschaulichung der Kraftübertragung an der Umfangsfläche eines zylindrischen Sockelteils, wobei zum Vergleich in der linken Figurenhälfte die Kraft-Verteilung für einen Sockelteil mit einer Rillen aufweisenden Aussenfläche und in der rechten Figurenhälfte zum Vergleich die Kraft-Verteilung für einen Sockelteil mit einer glatt-kreiszylindrischen Aussenfläche eingezeichnet ist,

die Figuren 9 bis 12 schaubildliche Darstellungen von andern Implantat-Varianten und

die Figur 13 ein Diagramm zur Veranschaulichung der quer zur Achse verschiedenartiger zylindrischer Sockelteile gerichteten Auslenkung der Sockelteile.

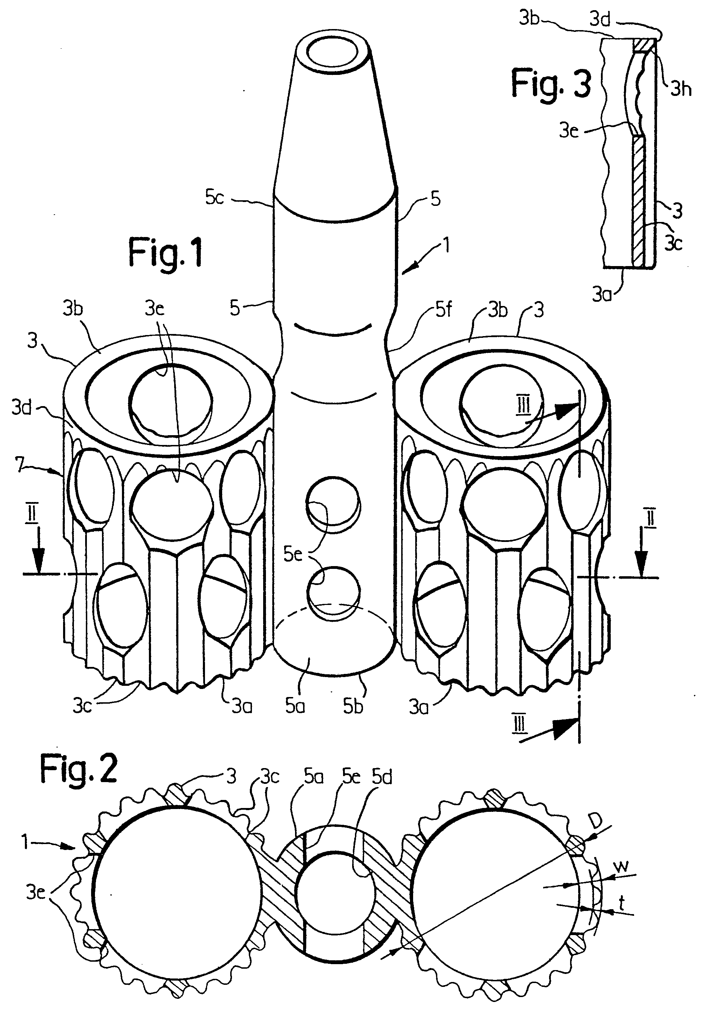

In den Figuren 1 und 2 ist ein als Ganzes mit 1 bezeichnetes Implantat zum Befestigen eines künstlichen Zahnersatzes an einem Kiefer oder genauer gesagt Kiefer-Knochen dargestellt. Das Implantat 1 besteht aus Metall, beispielsweise Titan oder rostfreiem Stahl, und weist zwei hohle, im allgemeinen kreiszylindrische Teile, nämlich Hülsen 3 auf. Diese sind an ihren beiden Enden vollständig offen, so dass sie also ausschliesslich aus einem an seinen beiden Enden durch radiale Endflächen 3a, 3b begrenzten Hülsenmantel bestehen und weder einen Boden noch eine Deckwand aufweisen. Anders gesagt, weisen die Hülsen eine entlang ihrer Mittel- oder Rotationssymmetrieachse verlaufende kreiszylindrische Durchgangsöffnung auf, die durchgehend den gleichen Querschnitt hat.

Ferner ist ein im allgemeinen rotationssymmetrischer Zapfen 5 vorhanden, dessen Mittel-, Rotationssymmetrie- oder Längsachse parallel zu den Rotationssymmetrie-Achsen der Hülsen 3 verläuft und in der gleichen Ebene liegt wie diese. Im übrigen befindet sich der Zapfen 5 in der Mitte zwischen den beiden Hülsen 3. Der Teil 5a des Zapfens 5 ist dabei starr mit den beiden Hülsen 3 verbunden. Das Implantat besteht vorzugsweise aus einem einstückigen Körper. Der Zapfen könnte aber auch mit den Hülsen 3 verschweisst sein. Bei den Verbindungsstellen des Zapfen-Teils 5a mit den Hülsen 3 durchdringen sich die zylindrischen Hüllflächen des Zapfen-Teils 5a und der Hülsen 3 ein wenig oder schmiegen sich mindestens aneinander an. Die Endfläche 5b des Zapfen-Teils 5a ist mit der einen Endfläche 3a der Hülsen 3 bündig. Die beiden hohlzylindrischen Hülsen 3 und der Zapfen-Teil 5a bilden zusammen einen zum Verankern im Kiefer-Knochen bestimmten Sockel 7. Ein Teil des Zapfens 5 ragt über die Endflächen 3b der Hülsen 3 heraus und bildet einen Pfeiler 5c zum Halten eines künstlichen Zahnersatzes.

Die Aussenfläche von jeder Hülse 3 ist mit mindestens zehn, vorzugsweise fünfzehn bis dreissig, und beispielsweise ungefähr zwanzig Rillen 3c versehen, die entlang der Mittel- oder Rotationssymmetrieachse der Hülse 3 und des Zapfens 5 verlaufen und, wenn man von der Verbindungsstelle der Hülsen 3 und des Zapfens 5 absieht, gleichmässig über den Hülsen-Umfang verteilt sind. Die Rillen 3c bilden Vertiefungen und ergeben zusammen mit den sich dazwischen befindenden Stegen, Rippen oder Erhöhungen eine wellenförmige Profilierung. In den rechtwinklig zu der Hülsen-Achsen gelegten Schnitten sind die Rillen 3c, die sich dazwischen befindenden Erhöhungen und die Übergänge zwischen den Rillen und Erhöhungen stetig verrundet. Die Rillen 3c münden in die Endfläche 3a der Hülsen 3, erstrecken sich dagegen nicht ganz bis zur andern Endfläche 3b. Wie man aus der Figur 3 ersehen kann, werden die Rillen 3c kurz vor der Endfläche 3b durch nach aussen in die kreiszylindrische Hüllfläche laufende, gebogene Endflächen 3h begrenzt. Bei dem sich in der Figur 1 oben befindenden Hülsenrand hat also die Aussenfläche des Hülsenmantels zwischen den Enden der Rillen 3c und der Endfläche 3b einen glatt-zylindrischen, rillenlosen Streifen 3d, dessen Aussendurchmesser gleich dem Durchmesser D der kreiszylindrischen Hüllfläche des die Rillen 3c aufweisenden Abschnittes der Hülsen 3 ist.

Im übrigen sind in den Hülsen 3 eine Anzahl über deren Mäntel verteilter Durchgangslöcher 3e vorhanden. Diese sind durch Bohrungen gebildet, deren Durchmesser grösser als die Breite der Rillen 3c ist und die die Rillen 3c kreuzen und teilweise unterbrechen. Die Löcher 3e können beispielsweise derart auf zwei entlang der Zylinderachsen gegeneinander versetzten Kreisen verteilt sein, dass sich die auf einem Kreis angeordneten Löcher in der Mitte zwischen zwei auf dem anderen Kreis angeordneten Löchern befinden. Dabei sind auf jedem Kreis mindestens drei Löcher 3e, und beispielsweise auf dem einen Kreis drei und auf dem anderen vier Löcher angeordnet. Die beiden stirnseitigen Randabschnitte jeder Hülse 3 hängen dann bei verschiedenen Umfangstellen durch zwischen den Löchern 3e hindurch verlaufende Stege zusammen. Anders gesagt, weist jede Hülse 3 bei mehreren entlang ihrem Umfang gegeneinander versetzten Stellen über die ganze Hülsenlänge zusammenhängende Mantelabschnitte auf. Von diesen verlaufen die die Hülsen 3 mit dem Zapfen 5 verbindenden Mantelabschnitte geradlinig und parallel zu den Hülsenachsen, während die restlichen dieser Mantelabschnitte ungefähr Zickzack- oder Z-förmig zwischen den Löchern 3e hindurch verlaufen.

Die maximalen Aussendurchmesser D und die Längen oder Höhen der Hülsen 3 sind ungefähr gleich gross und betragen zweckmässigerweise mindestens etwa 4 mm und beispielsweise 5 bis 6 mm. Die maximalen Wandstärken w der Hülsenmäntel und damit die radial gemessenen Breiten der Endflächen 3b betragen mindestens 7% und höchstens 15%, beispielsweise etwa 10% des maximalen Aussendurchmessers D der Hülsenmäntel. Die maximalen Wandstärken w der Hülsen 3 betragen beispielsweise mindestens etwa 0,35 mm und höchstens etwa 0,9 mm und beispielsweise 0,5 bis 0,6 mm. Die Längen der Rillen 3c sind 0,1 bis 1 mm kürzer als die Längen oder Höhen der Hülsen 3. Die Tiefe t der Rillen 3c beträgt mindestens 20%, zweckmässigerweise mindestens 30 und höchstens 70% und vorzugsweise etwa 35 bis 60% der Wandstärke w. Die Tiefe t kann beispielsweise etwa 0,1 bis 0,3 mm betragen. Der Abstand benachbarter Rillen beträgt zweckmässigerweise mindestens 0,4 mm und beispielsweise 0,6 bis 0,8 mm und die Rillenbreite beträgt bei der halben Rillentiefe zweckmässigerweise mindestens 0,2 und beispielsweise 0,3 bis 0,4 mm. Im weitern sind die Formen und Abmessungen der Rillen beispielsweise derart festgelegt, dass die durch die Bildung der Rillen 3c verursachte Vergrösserung der Hülsenmantel-Aussenfläche bezüglich einer gelochten, aber rillenlosen Schmiege-Zylinderfläche mindestens 50%, vorzugsweise mindestens 80% und beispielsweise ungefähr 80 bis 100% beträgt.

Der Zapfen-Teil 5a ist mit einer kreiszylindrischen Längsöffnung 5d versehen, die sich von seiner Endfläche 5b bis in die Höhe der Hülsen-Endflächen 3b erstreckt. Der Zapfen-Teil 5a bildet also ebenfalls eine Hülse, die aber nur an ihrem dem Pfeiler 5c abgewandten Ende offen ist. Die Wand des Zapfen-Teils 5a ist im übrigen ebenfalls von Löchern 5e, d.h. Bohrungen durchbrochen. Der Aussendurchmesser des Zapfen-Teils 5a ist auch der grösste Durchmesser des ganzen Zapfens 5 und kleiner als der Hülsen-Durchmesser D und kann beispielsweise 2,5 bis 3,5 mm betragen.

Der Pfeiler 5c kann in der Nähe der Hülsen-Endfläche 3b mit einer Einschnürung 5f versehen sein, deren Übergänge mit den anschliessenden Abschnitten des Zapfens 5 stetig verrundet sind. Der freie Endabschnitt des Pfeilers 5c verjüngt sich zu seinem Ende hin konisch.

In den Figuren 4, 5 und 6 ist ein Teil eines Oberkiefer-Knochens 9 dargestellt. Beim Oberkiefer-Knochen bildet die verhältnismässig kompakte und stabile Corticalis 9a mindestens in gewissen Bereichen nur eine ziemlich dünne Randzone. Das Innere des Knochens besteht dann aus der relativ lockeren Spongiosa 9b, wobei die beiden Knochenmaterialien in einer Übergangszone mehr oder weniger stetig ineinander übergehen. In den Figuren 5 und 6 wie übrigens auch in der Figur 7, ist die Corticalis durch eine feine Punktierung und die Spongiosa durch eine grobe Körnung dargestellt.

Zum Einsetzen eines Implantates 1 in einen Oberkiefer werden zuerst die nicht dargestellten, weichen Gewebeteile soweit als nötig entfernt und der Oberkiefer-Knochen 9 freigelegt. Danach wird zuerst eine volle Bohrung 9c in den Knochen 9 gebohrt, die nachher zum Aufnehmen des Zapfen-Teils 5a dient und einen dem letzteren entsprechenden Aussendurchmesser aufweist. In diese Bohrung 9c wird eine Lehre eingesetzt. Anschliessend werden mit Hilfe dieser Lehre zwei nachher zum Aufnehmen der Hülsen 3 dienenden Ringnuten 9d in den Knochen 9 gebohrt oder gefräst. Derartige Ringnuten 9d werden in der Chirurgie häufig als Trephine- oder Trepan-Bohrungen bezeichnet. Der Innendurchmesser der Ringnuten 9d ist ungefähr gleich dem Innendurchmesser der Hülsen 3. Der Aussendurchmesser der Ringnuten 9d ist ungefähr gleich dem Hülsen-Aussendurchmesser D und vorzugsweise etwa um die Rillentiefe t kleiner als dieser, so dass die Hülse 3 zum Einsetzen eingepresst werden müssen und das Knochenmaterial schon beim Einsetzen des Implantates in die Rillen 3c eindringt. Die Tiefe der Ringnuten 9d wird so bemessen, dass die Hülsen 3 vollständig im Knochen 9 versenkt werden können, dass aber die sich in der Nähe der Endflächen 3b befindenden Abschnitte der Hülsen und Rillen 3c mindestens teilweise noch in der Corticalis 9a liegen, wie es besonders deutlich aus der Figur 5 ersichtlich ist.

Wenn das Implantat in den Knochen 9 eingesetzt ist, sind also noch Knochenzapfen 9e vorhanden, die die Innenräume der Hülse 3 durchdringen und ausfüllen und vorzugsweise noch etwas aus diesen herausragen. Das Implantat sitzt schon unmittelbar nach dem Einpressen in den Knochen verhältnismässig starr in diesem fest, wodurch das Anwachsen von Knochenmaterial an das Implantat gefördert wird. Nach dem Einsetzen des Implantates in die im Knochen angebrachten Löcher schliesst das Implantat die inneren und grössten Teile dieser Löcher bei den pfeilerseitigen Rändern der Hülsen 3 annähernd dicht ab. Zu diesem annähernd dichten Abschluss der grössten Teile der Löcher trägt insbesondere auch die Tatsache bei, dass sich die Rillen 3c nicht ganz bis zu den pfeilerseitigen Enden der Hülsen 3 erstrekken, so dass die Hülsen bei diesen Enden nicht nur innen, sondern auch aussen durch eine glatte, kreiszylindrische Fläche begrenzt sind. Dieser praktisch dichte Abschluss der inneren Teile der im Knochen vorhandenen Löcher wirkt einem Eindringen von Mikroorganismen in diese Löcher und damit der Entstehung einer Infektion entgegen.

Nach dem Einsetzen des Implantates 1 wächst das Knochenmaterial durch die Löcher 3e, 5e hindurch sowie auch über die ringförmigen Hülsen-Endflächen 3b. Ferner wächst das Knochenmaterial auch in die Rillen 3c hinein, soweit es nicht bereits beim Einsetzen des Implantates in diese hineingelangt ist. Wenn sich der Knochen regeneriert hat und nachgewachsen ist, ergibt sich dann der in den Figuren 6 und 7 dargestellte Zustand, in dem der Sockel 7 vollständig von Knochenmaterial umschlossen und durchdrungen ist. Zum Überdecken der Hülsen 3 muss nur verhältnismässig wenig Knochenmaterial nachwachsen, nämlich nur gerade soviel, wie zum Überdecken der ringförmigen Endflächen 3b der Hülsenmäntel notwendig ist. Der Implantat-Sockel 7 ist daher nach dem Einsetzen des Implantates in verhältnismässig kurzer Zeit, abgesehen von dem mit dem Pfeiler 5c zusammenhängenden Zapfen-Teil 5a, vollständig von Knochenmaterial überdeckt. Wenn der Knochen die Hülse 3 überwachsen hat, weist er auch in deren Bereichen wieder ungefähr die ursprüngliche Höhe auf. Die Knochenaussenfläche verläuft dann, ohne dass bei den Hülsen eine Senke vorhanden ist, glatt bis zum Zapfen 5. Die Tatsache, dass die Hülsen 3 an beiden Enden vollständig offen sind und dass auch noch ihre Mäntel mit Löchern versehen sind, ermöglicht eine gute Blutversorgung der in den Hohlräumen der Hülsen vorhandenen Knochenteile. Dies wiederum trägt dazu bei, dass diese Knochenteile immer wieder regeneriert und auch bei grossen Belastungen lebend erhalten werden. Im übrigen bilden sich dann auch noch in den Figuren 4 bis 7 nicht dargestellte weiche Gewebeteile, die den Knochen umschliessen und in die Einschnürung 5f hineinwachsen. Am Pfeiler 5c kann dann ein künstlicher Zahnersatz 11, beispielsweise eine Brücke befestigt werden.

Wenn der Knochen 9 auf diese Weise gewissermassen mit dem Sockel 7 verwachsen ist, befinden sich also die bogenförmigen Endflächen 3h der Rillen 3c, wie in der Figur 7 dargestellt, in der Corticalis. Die Endflächen der Rillen 3c tragen daher dazu bei, in der Pfeiler-Längsrichtung vom Pfeiler 5c zum Sockel 7 gerichtete Druckkräfte auf den Knochen zu übertragen, und zwar auf dessen Corticalis, die, wie erwähnt, kompakter und stabiler ist als die Spongiosa.

Die Rillen 3c sind jedoch vor allem auch sehr wichtig für die Übertragung und quer zur Längsachse des Pfeilers 5c gerichteten Kräften. Es soll nun anhand der Figur 8 erläutert werden, wie eine quer zur Rotationssymmetrieachse des Pfeilers 5c, gerichtete Kraft P vom Knochen 9 auf eine Hülse 3 übertragen wird, wenn der Knochen in der vorgängig beschriebenen Weise in die Rillen 3c eingewachsen ist. Die Kraft P sei parallel zu einer Geraden gerichtet, die die Rotationssymmetrieachse der Hülse 3 rechtwinklig schneidet. In der linken Hälfte der Figur 6 ist schematisch der Umriss einer Hülse 3 dargestellt. Die Flanken dieser Rippen bilden nun auch an derjenigen Umfangsstelle, die am weitesten von der Geraden 15 entfernt ist, Flächen, die nicht parallel zur Richtung der Kraft P verlaufen, sondern mit dieser Richtung einen Winkel zwischen etwa 45 und 135° bilden. Dies gewährleistet, dass auch bei den am weitesten von der Geraden 15 entfernten Umfangsstellen noch Kräfte vom Knochen auf die Hülse 3 und umgekehrt übertragen werden. Bei der Übertragung der Kraft P wird die letztere daher in Teilkräfte aufgeteilt, deren Grösse und örtliche Verteilung qualitativ durch Pfeile 17 angedeutet ist. Die zu übertragende Kraft P wird also relativ gleichmässig auf einen grossen Teil des Umfangs der Hülse 3 verteilt. Ferner tragen natürlich auch die Begrenzungsflächen der Löcher 3e, 5e zur Kraftübertragung bei. Daraus resultiert eine relativ gleichmässige örtliche Verteilung der Kräfte und Beanspruchungen des Knochenmaterials.

Wenn die Aussenfläche des Hülsenmantels dagegen eine glatte Zylinderfläche wäre, ergäbe sich die qualitativ in der rechten Hälfte der Figur 8 durch die Pfeile 19 dargestellten Teil-Kräfte. Die relativ weit von der Geraden 15 entfernten Umfangsbereiche der Hülse wären dann für die Übertragung der Kraft P praktisch unwirksam.

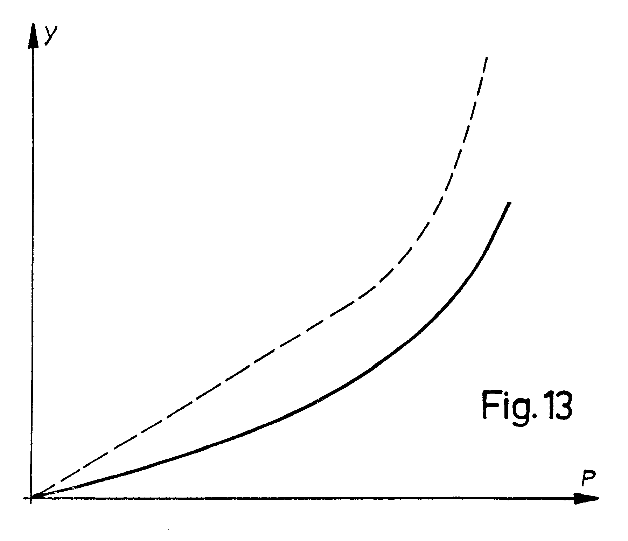

Wenn man beim Bohren der Löcher in den Knochen den Aussendurchmesser der Ringnuten 9d, wie erwähnt, ungefähr um eine Rillentiefe t kleiner macht als den Durchmesser D der Hüllflächen der Hülse 3, so tragen die Rillen 3c bereits unmittelbar nach dem Einsetzen des Implantates dazu bei, Kräfte zwischen dem Implantat und dem Knochen zu übertragen. Um den Einfluss der Rillen auf die Übertragung von quer zur Achse einer Hülse 3 gerichteten Kräfte quantitativ erfassen zu können, wurden zum Vergleich ein Zylinder mit einer glatten und ein Zylinder mit einer Rillen aufweisenden Aussenfläche in einen künstlichen Knochen aus Kunststoff eingepresst, die Zylinder mit einer quer zu ihrer Achse gerichteten Kraft beaufschlagt und die seitliche Auslenkung der Zylinder gemessen. Beim benutzten künstlichen Knochen handelte es sich um einen Knochen der ähnliche Festigkeitseigenschaften hat wie die natürliche Spongiosa. Die Messbedingungen entsprechen daher ungefähr den Verhältnissen, wie sie unmittelbar nach der Operation vorhanden sind, wenn ein Implantat in den Knochen eingepresst wurde, aber noch nicht festgewachsen ist. Die Messergebnisse sind in dem in der Figur 13 dargestellten Diagramm wiedergegeben, in dem auf der Abszisse die quer zur Zylinderachse auf die Zylinder ausgeübte Kraft P und auf der Ordinate die quer zur Zylinderachse gerichtete Zylinderauslenkung y, d.h. die Verschiebung des Zylinders aus der Ruhelage, aufgetragen ist. Die obere gestrichelte Kurve des Diagramms zeigt die Auslenkung eines Zylinders mit einer glatten, rillenlosen Mantelfläche und die untere, mit einer vollen Linie gezeichnete Kurve zeigt die Auslenkung eines Zylinders, dessen Mantelfläche mit ähnlichen Rillen versehen ist wie die Hülsen des Implantates. Wie aus dem Diagramm ersehen werden kann, wird der Rillen aufweisende Zylinder im ganzen Bereich nur ungefähr halb so viel ausgelenkt wie der Zylinder mit der glatten Aussenfläche. Dies belegt, dass die Stabilität der Implantat-Verankerung durch die Rillen beträchtlich verbessert wird.

Die nach der Regeneration des Knochens bei beiden Stirnseiten der Hülsen 3 vorhandenen, aus Knochenmaterial bestehenden Verbindungen zwischen hülseninneren und hülsenäusseren Knochenteilen tragen ebenfalls wesentlich zur Verankerung des Implantates und insbesondere zur Übertragung von quer zu den Hülsenachsen gerichteten Kräften zwischen dem Implantat und dem Knochen bei. Durch die zwischen die Rillen 3c hineinragenden Knochenteile und, wenn der Knochen die Löcher 3e und 5e durchwachsen und die Endfläche 3b überwachsen hat, auch durch die bei diesen Löchern und den Hülsenenden vorhandenen Knochenverbindungen werden bei der Kraftübertragung zwischen dem Implantat und dem Knochen insbesondere auch die bei den Grenzflächen zwischen dem Implantat und dem Knochen auftretenden, tangentialen Schubspannungen reduziert. Dies trägt dazu bei, bei den Grenzflächen einen Abbau von Knochenmaterial zu vermeiden.

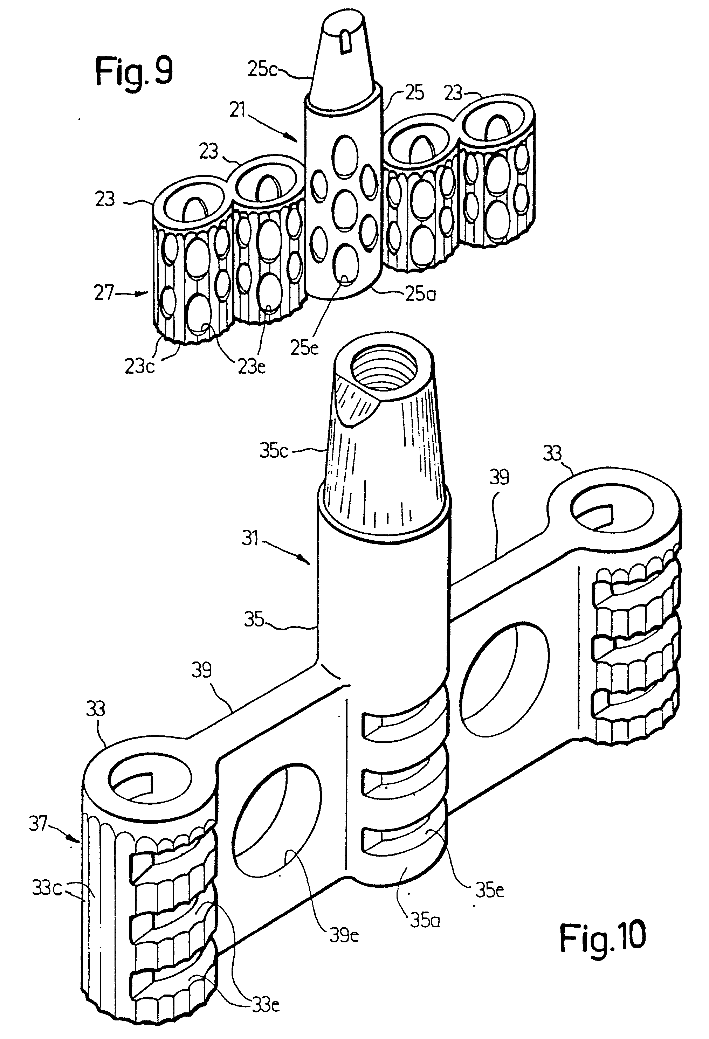

Das in der Figur 9 dargestellte Implantat 21 weist vier hohle, im allgemeinen kreiszylindrische, beidenends offene Hülsen 23 auf, die ähnlich ausgebildet sind wie die Hülsen 3 und insbesondere auch den Rillen 3c entsprechende Rillen 23c sowie Durchgangslöcher 23e aufweisen. Zwischen den beiden mittleren Hülsen 23 befindet sich ein längerer Zapfen 25, dessen einer Teil 25a starr mit den beiden benachbarten Hülsen 23 verbunden ist und mit diesen zusammen den in einem Kiefer verankerbaren Sockel 27 bildet. Die Achsen der Hülsen und des Zapfens 25 liegen dabei alle in der gleichen Ebene. Der Zapfen-Teil 25a hat ungefähr den gleichen Durchmesser wie die Hülsen 23 und ist ebenfalls als Hohlzylinder ausgebildet, der an seinem mit dem einen Hülsenende bündigen Ende offen ist. Ferner ist der Mantel des Zapfen-Teils 25a mit Durchgangslöchern 25e versehen. Der über die Hülsen 23 herausragende Endabschnitt des Zapfens 25 bildet einen Pfeiler 25c zum Halten eines Zahnersatzes.

Das in der Figur 10 dargestellte Implantat 31 weist zwei hohle, im allgemeinen kreiszylindrische, beidenends offene Hülsen 33 auf, die mit den Rillen 3c entsprechenden Rillen 33c versehen sind. Die Mäntel der Hülsen 33 sind mit Löchern 33e in der Form von rechtwinklig zu den Mittelachsen der Hülsen verlaufenden Schlitzen versehen. Ferner ist ein Zapfen 35 vorhanden, der beispielsweise den gleichen Aussendurchmesser hat wie die Hülsen 33 und dessen Teil 35a durch je einen Steg 39 starr mit den Hülsen 33 verbunden ist, so dass die Achsen der Hülsen 33 und des Zapfens 35 parallel zueinander verlaufen und in der gleichen Ebene liegen. Die rechtwinklige zu dieser Ebene gemessene Breite der Stege 39 ist wesentlich kleiner als der Aussendurchmesser der Hülsen 33 und des Zapfens 35 und beträgt höchstens 50% und beispielsweise ungefähr 30 bis 40% dieser Aussendurchmesser. Die Hülsen 33, der Zapfen-Teil 35a und die Stege 39 bilden zusammen den zum Verankern in einem Kiefer-Knochen bestimmten Sockel 37. Der Zapfen-Teil 35a ist hohl und sein Mantel ist von Durchgangslöchern 35e durchbrochen, die durch quer zur Stab-Längsachse verlaufende Schlitze gebildet sind. Die Stege 39 sind von je mindestens einem runden Loch 39e durchbrochen. Der über den Sockel 37 vorstehende Teil des Zapfens 35 bildet einen Pfeiler 35c zum Halten eines Zahnersatzes.

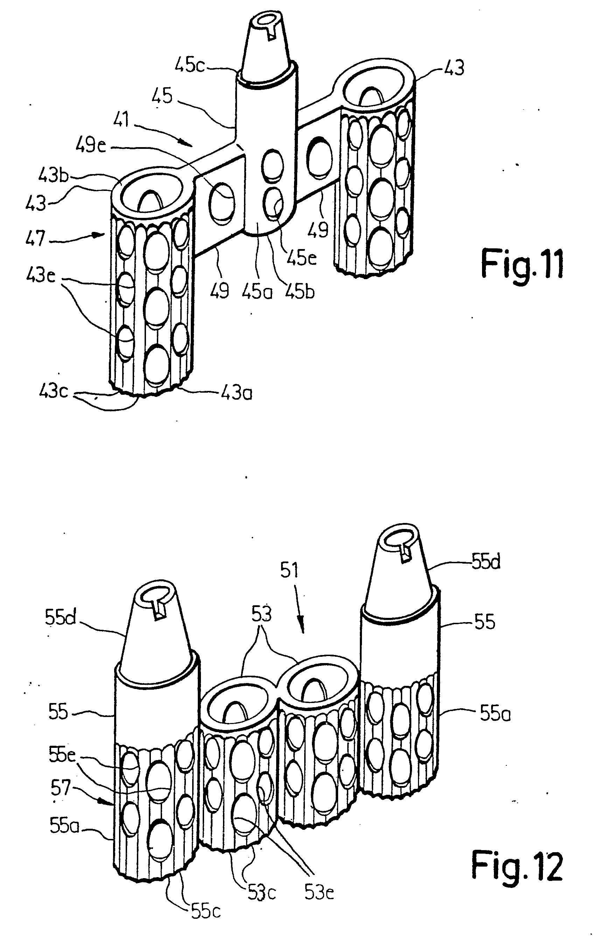

Das in der Figur 11 dargestellte Implantat 41 weist zwei hohle, im allgemeinen kreiszylindrische, beidenends vollständig offene Hülsen 43 mit Endflächen 43a, 43b, Rillen 43c und runden Löchern 43e und einen Zapfen 45 mit einem hohlen Teil 45a auf, der mit runden Löchern 45e versehen und durch zwei ein rundes Loch 49e aufweisende Stege 49 mit den Hülsen 43 verbunden ist. Der Sockel 47 des Implantates 41 besteht also gleich wie der Sockel 37 des Implantates 31 aus zwei Hülsen, einem Zapfen-Teil und zwei Stegen, unterscheidet sich aber vom Sockel 37 insbesondere dadurch, dass die Höhe der Stege 49 kleiner ist als die Höhe oder Länge der Hülse 43. Die Stege 49 erstrecken sich nämlich von den Endflächen 43b der Hülsen 43 aus nur bis ungefähr zur halben Höhe der Hülsen. Die Endfläche 45b des Zapfen-Teils 45a ist bündig mit den sich ungefähr in halber Hülsenhöhe befindenden Stegrändern. Der über den Sockel 47 herausragende Teil des Zapfens 45 bildet wiederum einen Pfeiler 45c zum Halten eines Zahnersatzes.

Das in der Figur 12 dargestellte Implantat 51 weist zwei hohle, im allgemeinen kreiszylindrische, beidenends offene Hülsen 53 auf. Ihre Mäntel sind analog wie diejenigen der Hülsen 3 mit Rillen 53c und runden Löchern 53e versehen. Ferner sind zwei Zapfen 55 vorhanden, deren Teile 55a zusammen mit den beiden Hülsen 53 den Sockel 57 des Implantates bilden. Die Rotationssymmetrieachsen der Hülsen 53 und Zapfen 55 verlaufen parallel zueinander und liegen alle in der gleichen Ebene und die beiden Hülsen 53 sind zwischen den beiden Zapfen 55 angeordnet wobei die Hülsen und Zapfen paarweise starr miteinander verbunden sind. Die Zapfen-Teile 55a sind hohlzylindrisch und mit Rillen 55c versehen, die gleich ausgebildet sind und sich bis in die gleichen Höhen erstrecken wie die Rillen 53c. Im übrigen sind die Mäntel der hohlen Zapfen-Teile 55 mit runden Durchgangslöchern 55e versehen. Die über den Sockel 57 herausragenden Zapfen-Teile bilden zwei zum Verankern eines Zahnersatzes dienende Pfeiler 55d.

Bei den in den Figuren 9, 10, 11, 12 dargestellten Implantaten 21, 31, 41, 51 sind die beiden äussersten Hülsen verhältnismässig weit voneinander entfernt. Dies erlaubt, die Durchmesser der Hülsen etwas kleiner festzulegen als beim Implantat 1, ohne dass dadurch die Festigkeit der Verankerung beeinträchtigt wird. Beispielsweise kann man bei dem in der Figur 10 dargestellten Implantat 31, wie bereits erwähnt, den Durchmesser der Hülsen 33 etwa gleich gross wie den Durchmesser des Zapfens 35 machen. Diese Durchmesser können dann ohne weiteres kleiner als 4 mm sein und vorzugsweise mindestens 2 mm und beispielsweise ungefähr 2,5 bis 3,5 mm betragen.

Für die in den Figuren 10, 11 dargestellten Implantate 31, 41, bei denen der Sockel auch noch mindestens einen Steg aufweist, kann man die zum Aufnehmen der Stege bestimmten Rinnen im Knochen beispielsweise dadurch bilden, dass man eine Reihe einander teilweise überlappender Bohrungen in den Knochen bohrt.

Wie im Hinblick auf das Implantat 1 anhand der Figuren 5, 6, 7, 8 und 13 erörtert wurde, ergeben die Rillen und Löcher in den Hülsen des Implantat-Sockels eine beträchtliche Verbesserung der Kraftübertragung zwischen Implantat und Knochen. Das Entsprechende gilt natürlich auch für alle anderen in der Zeichnung dargestellten Ausführungsvarianten.

Die Implantate 1, 21, 31, 41 und 51 sind vor allem zur Befestigung von Zahnbrücken geeignet. Da die Ausbildung der Kieferknochen und Zähne individuell stark variieren, können Implantate mit unterschiedlichen Sockel-Abmessungen, insbesondere unterschiedliche Hülsen-Längen bereit gestellt werden, so dass ein Zahnarzt oder Chirurg jeweils ein Implantat auswählen kann, das für den individuellen Fall möglichst günstig ist.

Die verschiedenen beschriebenen Implantate werden zweckmässigerweise aus einem kompakten, d.h. im wesentlichen porenfreien, vorzugsweise aus Titan bestehenden Grundkörper gebildet, auf den durch ein Plasmabeschichtungsverfahren eine dünne, körnige Titanschicht mit einer beispielsweise in der Grösse von 0,01 bis 0,02 mm liegenden Rauheit aufgebracht wird. Dadurch wird die Haftfestigkeit am Knochen zusätzlich verbessert.

Die Zahnimplantate können noch in verschiedener Hinsicht modifiziert werden.

Beispielsweise könnte man bei den Implantaten 1, 21, 31, 41 und 51 die Hülsen und Pfeiler derart versetzen, dass ihre Achsen zwar noch zueinander parallel sind, aber nicht mehr in der gleichen Ebene, sondern in einer gebogenen Fläche liegen.

Ferner könnte der Pfeiler der Implantate bei seiner Verbindung mit dem Sockel eine verrundete Einschnürung aufweisen.

Des weitern könnte man bei den Implantaten 1, 21, 31 und 41 auch noch die zum Sockel gehörenden Zapfen-Teile 5a, 25a, 35a, 45a mit analog zu den Rillen 3c ausgebildeten Rillen versehen. Ferner könnten bei den Implantaten 31 und 41 auch die zum Sockel gehörenden Stege mit parallel zu den Pfeilerachsen verlaufenden und analog zu den Rillen 3c ausgebildeten Rillen versehen werden.

Ferner könnten die Aussenflächen der Längsrillen aufweisenden Hülsen zusätzlich noch mit Rillen versehen werden, die ringförmig oder schraubenlinienförmig um die Hülsen herum verlaufen. Diese zusätzlichen Rillen würden dann die vorhandenen Längsrillen kreuzen und die zwischen diesen vorhandenen Stege oder Erhöhungen unterbrechen.

Es bestände auch noch die Möglichkeit, die Innenfläche der Hülsen mit entlang der Rotationssymmetrieachsen der Hülse verlaufenden Rillen zu versehen.

Bei den Implantaten, bei denen der Sockel mindestens zwei kreiszylindrische Teile aufweist und bei denen der Sockel eventuell noch mit einer durch Plasmabeschichtung gebildeten, rauhen Oberfläche versehen ist, kann der Sockel auch ohne Rillen ausreichend gut verankerbar sein, so dass die Rillen eventuell wegfallen können.

**Patentansprüche**

1. Implantat (1, 21, 31, 41, 51) zur Befestigung eines künstlichen Zahnersatzes (11) an einem Kiefer-Knochen (9), das einen zum Einsetzen in den letzteren bestimmten Sockel (7, 27, 37, 47, 57) und mindestens einen Pfeiler (5c, 25c, 35c, 45c, 55d) zum Halten des Zahnersatzes (11) aufweist, wobei der Sockel (7, 27, 37, 47, 57) mindestens zwei im allgemeinen kreiszylindrische, hohle Teile (3, 23, 33, 43, 53) aufweist, deren Achsen parallel zueinander verlaufen und die an ihrem dem Pfeiler (5c, 25c, 35c, 45c, 55d) abgewandten Ende offen sind, dadurch gekennzeichnet, dass mindestens zwei der im allgemeinen kreiszylindrischen, hohlen Teile (3, 23, 33, 43, 53) auch an ihrem sich näher beim Pfeiler (5c, 25c, 35c, 45c, 55d) befindenden Ende vollständig offen sind.

2. Implantat nach Anspruch 1, dadurch gekennzeichnet, dass alle seine Teile starr und unlösbar miteinander verbunden sind, wobei das Implantat (1, 21, 31, 41, 51) beispielsweise aus einem einstückigen Körper besteht, und dass der Mantel der im allgemeinen kreiszylindrischen, beidenends offenen Teile (3, 23, 33, 43, 53) mit Durchgangslöchern (3e, 23e, 33e, 43e, 53e) versehen ist und bei verschiedenen Umfangstellen über seine ganze Länge zusammenhängende Abschnitte aufweist.

3. Implantat nach Anspruch 1 oder 2, dadurch gekennzeichnet, dass der Sockel (7, 27, 57) ausschliesslich aus im allgemeinen kreiszylindrischen Teilen (3, 5a, 23, 25a, 53, 55a) besteht, deren Rotationssymmetrieachsen parallel zueinander verlaufen und die einander tangieren oder einander durchdringen und alle hohl sowie mindestens an ihrem dem Pfeiler (5c, 25c, 55d) abgewandten Ende offen sind.

4. Implantat nach Anspruch 1 oder 2, dadurch gekennzeichnet, dass der Pfeiler (35c, 45c) über Stege (39, 49) mit den im allgemeinen kreiszylindrischen Teilen (33, 43) verbunden ist.

5. Implantat nach Anspruch 4, dadurch gekennzeichnet, dass jeder Steg (39, 49) von einem Loch (39e, 49e) durchbrochen ist.

6. Implantat nach einem der Ansprüche 1 bis 5, dadurch gekennzeichnet, dass die Mäntel der im allgemeinen kreiszylindrischen, beidenends offenen Teile (3, 23, 33, 43, 53) mit Durchgangslöchern (3e, 23e, 33e, 43e, 53e) versehen sind, wobei der Sockel (7, 27, 37, 47, 57) vorzugsweise auch noch einen mit dem Pfeiler (5c, 25c, 35c, 45c, 55d) fluchtenden, zapfenförmigen Teil (5a, 25a, 35a, 45a, 55a) mit einer kreiszylindrischen, in das dem Pfeiler (5c, 25c, 35c, 45c, 55d) abgewandte Ende des zapfenförmigen Teils (5a, 25a, 35a, 45a, 55a) mündenden Längsöffnung (5d) und einem diese begrenzenden, von Löchern (5e, 25e, 35e, 45e, 55e) durchbrochenen Mantel aufweist.

7. Implantat nach Anspruch 4 oder 5 und Anspruch 6, dadurch gekennzeichnet, dass die in den Mänteln der im allgemeinen kreiszylindrischen, beidenends offenen Teile (33) vorhandenen Löcher (33e) durch rechtwinklig zu den Achsen der im allgemeinen kreiszylindrischen, beidenends offenen Teile (33) verlaufende Schlitze gebildet sind, wobei die Stege (39) vorzugsweise an ihren den letztgenannten Teilen (33) abgewandten Enden mit einem mit dem Pfeiler (35c) fluchtenden, zapfenförmigen, hohlen, an seinem dem Pfeiler (35c) abgewandten Ende offenen Teil (35a) verbunden sind, dessen Mantel vorzugsweise von Durchgangslöchern (35e) durchbrochen ist, die durch quer zur Pfeilerachse verlaufende Schlitze gebildet sind.

8. Implantat nach einem der Ansprüche 1 bis 5, dadurch gekennzeichnet, dass mindestens die genannten, im allgemeinen kreiszylindrischen, beidenends offenen Teile (3, 23, 33, 43, 53) des Sokkels (7, 27, 37, 47, 57) mit Vertiefungen (3c, 23c, 33c, 43c, 53c) und/oder Erhöhungen versehen sind, die entlang von zur Achse des Pfeilers (5c, 25c, 35c, 45c, 55d) parallelen Geraden verlaufen oder angeordnet sind, wobei sich diese Vertiefungen (3c, 23c, 33c, 43c, 53c) und/oder Erhöhungen vorzugsweise an den Aussenflächen der Mäntel der Teile (3, 23, 33, 43, 53) befinden und wobei die Mäntel der Teile (3, 23, 33, 43, 53) vorzugsweise die Vertiefungen (3c, 23c, 33c, 43c, 53c) und/oder Erhöhungen kreuzende Durchgangslöcher (3e, 23e, 33e, 43e, 53e) aufweisen.

9. Implantat nach Anspruch 8, dadurch gekennzeichnet, dass die Vertiefungen durch Rillen (3c, 23c, 33c, 43c, 53c) gebildet sind, deren eine Enden in die dem Pfeiler (5c, 25c, 35c, 45c, 55d) abgewandte Endfläche (3a) des Sockels (7, 27, 37, 47, 57) münden und deren andere Enden durch nach aussen laufende, vorzugsweise gebogene Endflächen (3h) begrenzt sind.

10. Implantat nach Anspruch 8 oder 9, dadurch gekennzeichnet, dass die Vertiefungen (3c, 23c, 33c, 43c, 53c) sowie die sich dazwischen befindenden Erhöhungen und die Übergänge zwischen den Vertiefungen (3c, 23c, 33c, 43c, 53c) und Erhöhungen in einem zur Pfeiler-Längsrichtung rechtwinkligen Schnitt stetig verrundet sind.

**Claims**

1. Implant (1, 21, 31, 41, 51), for the attachment of an artificial tooth replacement (11) at a jaw bone (9), which displays a socket (7, 27, 37, 47, 57) for insertion into the latter and at least one post (5c, 25c, 35c, 45c, 55d) for mounting the tooth replacement (11), wherein the socket (7, 27, 37, 47, 57) displays at least two generally circularly cylindrical hollow parts (3, 23, 33, 43, 53), the axes of which each extend parallelly to the other and which are open at their ends remote from the post (5c, 25c, 35c, 45c, 55d), characterised thereby, that at least two of the generally circularly cylindrical hollow parts (3, 23, 33, 43, 53) are completely open also at their ends disposed nearer to the post (5c, 25c, 35c, 45c, 55d).

2. Implant according to claim 1, characterised thereby, that all its parts are rigidly and undetachably connected one with the other, wherein the implant (1, 21, 31, 41, 51) for example consists of a one-piece body, and that the shell of the generally circularly cylindrical parts (3, 23, 33, 43, 53), which are open at both ends, is provided with passage holes (3e, 23e, 33e, 43e, 53e) and at different circumferential locations displays portions contiguous over its entire length.

3. Implant according to claim 1 or 2, characterised thereby, that the socket (7, 27, 57) consists exclusively of generally circularly cylindrical parts (3, 5a, 23, 25a, 53, 55a), the axes of rotational symmetry of which extend one parallelly to the other and which touch or penetrate one the other and are all hollow as well as open at least at their ends remote from the post (5c, 25c, 55d).

4. Implant according to claim 1 or 2, characterised thereby, that the post (35c, 45c) is connected by way of webs (39, 49) with the generally circularly cylindrical parts (33, 43).

5. Implant according to claim 4, characterised thereby , that each web (39, 49) is penetrated by a hole (39e, 49e).

6. Implant according to one of the claims 1 to 5, characterised thereby, that the shell of the generally circularly cylindrical parts (3, 23, 33, 43, 53), which are open at both ends, are provided with passage holes (3e, 23e, 33e, 43e, 53e), wherein the socket (7, 27, 37, 47, 57) preferably also still displays a spigot-shaped part (5a, 25a, 35a, 45a, 55a), which is aligned with the post (5c, 25c, 35c, 45c, 55d), with a circularly cylindrical longitudinal aperture (5d) opening out in that end of the spigot-shaped part (5a, 25a, 35a, 45a, 55a), which is remote from the post (5c, 25c, 35c, 45c, 55d), and with a shell bounding this aperture and perforated by holes (5e, 25e, 35e, 45e, 55e).

7. Implant according to claim 4 or 5 and claim 6, characterised thereby, that the holes (33e), which are present in the shells of the generally circularly cylindrical parts (33), which are open at both ends, are formed by slots extending at right angles to the generally circularly cylindrical parts (33), which are open at both ends, wherein the webs (39) are preferably at their ends remote from the last-mentioned parts (33) connected with a spigot-shaped hollow part (35a), which is aligned with the post (35c) and open at its end remote from the post (35c) and the shell of which is preferably perforated by passage holes (35e), which are formed by slots extending transversely to the axis of the post.

8. Implant according to one of the claims 1 to 5, characterised thereby, that at least the named generally circularly cylindrical parts (3, 23, 33, 43, 53), which are open at both ends, of the socket (7, 27, 37, 47, 57) are provided with depressions (3c, 23c, 33c, 43c, 53c) and/or protrusions which extend or are arranged along straight lines parallel to the axis of the post (5c, 25c, 35c, 45c, 55d), wherein these depressions (3c, 23c, 33c, 43c, 53c) and/or protrusions are preferably disposed at the external surfaces of the shells of the parts (3, 23, 33, 43, 53) and wherein the shells of the parts (3, 23, 33, 43, 53) preferably display passage holes (3e, 23e, 33e, 43e, 53e) crossing the depressions (3c, 23c, 33c, 43c, 53c) and/or protrusions.

9. Implant according to claim 8, characterised thereby, that the depressions are formed by grooves (3c, 23c, 33c, 43c, 53c), the one ends of which open into that end surface (3a) of the socket (7, 27, 37, 47, 57), which is remote from the post (5c, 25c, 35c, 45c, 55d), and the other ends of which are bounded by outwardly extending, preferably arcuate end surfaces (3h).

10. Implant according to claim 8 or 9, characterised thereby, that the depressions (3c, 23c, 33c, 43c, 53c) as well as the protrusions disposed therebetween and the transitions between the depressions (3c, 23c, 33c, 43c, 53c) and the protrusions are steadily rounded in a section at right angles to the longitudinal direction of the post.

**Revendications**

1. Implant (1, 21, 31, 41, 51) pour la fixation d'une prothèse dentaire (11) à un os maxillaire, possédant un socle (7, 27, 37, 47, 57) destiné à être mis en place dans l'os et au moins un pilier (5c, 25c, 35c, 45c, 55d) pour supporter la prothèse dentaire (11), le socle (7, 27, 37, 47, 57) comportant au moins deux parties creuses (3, 23, 33, 43, 53) de forme générale cylindrique circulaire, dont les axes sont parallèles et qui sont ouvertes à leur extrémité éloignée du pilier (5c, 25c, 35c, 45c, 55d), caractérisé en ce qu'au moins deux des parties creuses (3, 23, 33, 43, 53) de forme générale cylindrique circulaire sont également complètement ouvertes à leur extrémité située plus près du pilier (5c, 25c, 35c, 45c, 55d).

2. Implant selon la revendication 1, caractérisé en ce que toutes ses parties sont reliées rigidement et de façon indétachable les unes au autres, l'implant (1, 21, 31, 41, 51) étant formé par exemple d'un corps d'un seul tenant, et que la paroi latérale des parties (3, 23, 33, 43, 53) de forme générale cylindrique circulaire et ouvertes aux deux extrémités est pourvue de trous traversants (3e, 23e, 33e, 43e, 53e) et présente à différents endroits circonférentiels des tronçons cohérents s'étendant sur toute sa longueur.

3. Implant selon la revendication 1 ou 2, caractérisé en ce que le socle (7, 27, 57) est constitué exclusivement de parties (3, 5a, 23, 25a, 53, 55a) de forme générale cylindrique circulaire, dont les axes de symétrie de révolution sont parallèles, qui sont mutuellement tangentes ou qui s'intersectent et qui sont toutes creuses et ouvertes au moins à leur extrémité éloignée du pilier (5c, 25c, 55d).

4. Implant selon la revendication 1 ou 2, caractérisé en ce que le pilier (35c, 45c) est relié aux parties (33, 43) de forme générale cylindrique circulaire par des entretoises (39, 49).

5. Implant selon la revendication 4, caractérisé en ce que chaque entretoise (39, 49) est traversée par un trou (39e, 49e).

6. Implant selon l'une des revendications 1 à 5, caractérisé en ce que les parois latérales des parties (3, 23, 33, 43, 53) de forme générale cylindrique circulaire et ouvertes aux deux extrémités, sont pourvues de trous traversants (3e, 23e, 33e, 43e, 53e), le socle (5, 27, 37, 47, 57) présentant de préférence en plus une partie (5a, 25a, 35a, 45a, 55a) en forme de tenon qui est alignée avec le pilier (5c, 25c, 35c, 45c, 55d) et qui présente une ouverture longitudinale (5d) de forme cylindrique circulaire, débouchant dans l'extrémité éloignée du pilier (5c, 25c, 35c, 45c, 55d) de la partie (5a, 25a, 35a, 45a, 55a) en forme de tenon, ainsi qu'une paroi latérale qui délimite cette ouverture et est traversée de trous (5e, 25e, 35e, 45e, 55e).

7. Implant selon la revendication 4 ou 5 et la revendication 6, caractérisé en ce que les trous (33e) dans les parois latérales des parties (33) de forme générale cylindrique circulaire et ouvertes aux deux extrémités, sont formées par des fentes s'étendant à angle droit par rapport aux axes des parties (33) de forme générale cylindrique circulaire et ouvertes aux deux extrémités, les entretoises (39), à leurs extrémités éloignées des parties (33) mentionnées en dernier, étant de préférence reliées à une partie creuse (35a) en forme de tenon, qui est alignée avec le pilier (35c) et est ouvert à son extrémité éloignée du pilier (35c), dont la paroi latérale est de préférence traversée par des trous (35e) formés par des fentes s'étendant transversalement à l'axe du pilier.

8. Implant selon l'une des revendications 1 à 5, caractérisé en ce qu'au moins les parties (3, 23, 33, 43, 53) de forme générale cylindrique circulaire et ouvertes aux deux extrémités du socle (7, 27, 37, 47, 57) sont pourvues de creux (3c, 23c, 33c, 43c, 53c) et/ou de parties plus élevées qui s'étendent ou sont disposées le long de droites parallèles à l'axe du pilier (5c, 25c, 35c, 45c, 55d), ces creux (3c, 23c, 33c, 43c, 53c) et/ou parties plus élevées se trouvant de préférence aux surfaces extérieures des parois latérales des parties (3, 23, 33, 43, 53), les parois latérales desdites parties (3, 23, 33, 43, 53) présentant de préférence des trous traversants (3e, 23e; 33e, 43e, 53e) qui croisent les creux (3c, 23c, 33c, 43c, 53c) et/ou les parties plus élevées.

9. Implant selon la revendication 8, caractérisé en ce que les creux sont formés par des rainures (3c, 23c, 33c, 43c, 53c) dont les extrémités d'un côté débouchent dans la face terminale (3a) du socle (7, 27, 37, 47, 57) éloignée du pilier (5c, 25c, 35c, 45c, 55d) et dont les autres extrémités sont délimitées par des surfaces d'extrémités (3h) qui s'étendent vers l'extérieur et sont de préférence courbes.

10. Implant selon la revendication 8 ou 9, caractérisé en ce que les creux (3c, 23c, 33c, 43c, 53c), de même que les parties plus élevées se trouvant entre eux et les transitions entre les creux (3c, 23c, 33c, 43c, 53c) et les parties plus élevées, présentent des arrondis continus dans une coupe perpendiculaire à la direction longitudinale du pilier.

0 073 177

Fig. 3

3b  3d

3h

3e

3

3c

3a

5c

5

5

1

Fig.1

3b

3e

5f  3b  3

3

3d

7

III

II

II

III

5e

3c  3a  5a  5b  3a

Fig.2

3  3c  5a 5e 5d

D

1

w

3e

t

11

Fig. 4

Fig. 5

Fig. 6

Fig.7

Fig. 8

**Fig. 9**

25c
21
25
23
23
23
27
23c
23e
25e
25a

**Fig. 10**

35c
35
31
39
33
39
33
37
35e
35a
33c
39e
33e

Fig.11

Fig.12

Fig. 13